# EUROPÄISCHE PATENTSCHRIFT

(11) **EP 3 539 826 B1**
(45) Veröffentlichungstag und Bekanntmachung des Hinweises auf die Patenterteilung: **16.09.2020**
(21) Anmeldenummer: 19160670.6
(22) Anmeldetag: 05.03.2019
(51) Int. Cl.: B60R 1/00

(54) **FAHRERASSISTENZSYSTEM SOWIE VERFAHREN FÜR EIN KRAFTFAHRZEUG ZUM ANZEIGEN EINER ERWEITERTEN REALITÄT**
DRIVER ASSISTANCE SYSTEM AND METHOD FOR A MOTOR VEHICLE FOR DISPLAYING AUGMENTED REALITY DISPLAYS
SYSTÈME D'AIDE À LA CONDUITE AINSI QUE PROCÉDÉ POUR UN VÉHICULE AUTOMOBILE PERMETTANT D'AFFICHER UNE RÉALITÉ AUGMENTÉE

(30) Priorität: 14.03.2018 DE 102018203910
(43) Veröffentlichungstag der Anmeldung: 18.09.2019
(73) Patentinhaber: AUDI AG, 85045 Ingolstadt (DE)
(72) Erfinder: Lübcke, Michael, 85080 Gaimersheim (DE)

(56) Entgegenhaltungen:
- US-A1- 2015 197 197

## Beschreibung

Die Erfindung betrifft ein Fahrerassistenzsystem für ein Kraftfahrzeug. Das Fahrerassistenzsystem weist ein erstes Assistenzteilsystem zur Erfassung eines ersten Teilbereichs einer Umgebung des Kraftfahrzeugs und ein zweites Assistenzteilsystem zur Erfassung eines zweiten Teilbereichs der Umgebung auf. Das erste Assistenzteilsystem ist zum Erzeugen eines ersten Bilds des ersten Teilbereichs ausgebildet und das zweite Assistenzteilsystem ist zum Erzeugen eines zweiten Bilds des zweiten Teilbereichs ausgebildet. Das Fahrerassistenzsystem weist eine Anzeigeeinrichtung zum Anzeigen zumindest des ersten Bilds auf. Ferner betrifft die Erfindung ein Verfahren zum Betreiben eines Fahrerassistenzsystems.

Aus dem Stand der Technik sind bereits elektronische Spiegelsysteme bekannt, bei denen Kameras und Displays (Bildschirme) den eigentlichen Spiegel ersetzen. Dabei handelt es sich sowohl um Ersatz für die klassischen Außenspiegel an den Türen als auch um Ersatz für beispielsweise einen Innenspiegel in einem Innenraum des Kraftfahrzeugs. Die Kameras befinden sich dabei bevorzugt an Positionen, die ähnliche Perspektiven wie bei den entfallenen Spiegeln ergeben, beispielsweise an einer A-Säule/Türbrüstung oder einer hinteren Dachkante. In den Anzeigen der Displays können teilweise auch zusätzliche Informationen, zum Beispiel Abstandmarkierungen oder Markierungen von sich annähernden Fahrzeugen, beispielsweise bei einem Spurwechselassistenten, bei einem Blindspotdetection-Assistenten oder bei einem Überholassistenten, eingeblendet werden. Bei einer Unterstützung für eine Parksituation beschränkt sich in der Regel diese Unterstützung auf eine vertikale Verschiebung des Bildausschnitts des beifahrerseitigen Bildes, entsprechend einem Absenken des Spiegels.

Ebenso bekannt sind kamerabasierte Systeme, sogenannte "View-Systeme", zur Unterstützung in Park- und Rangiersituationen. Dies sind beispielsweise Rückfahrkameras oder auch Mehrkamerasysteme mit zum Beispiel aus vier Kameras zusammengesetzten Videobildern. Hier werden auch Einzelansichten auf bestimmte Bereiche umgesetzt. In diesen werden wiederum Abstandsmarkierungen der Einparkhilfe sowie Hilfslinien eingeblendet, die zum Beispiel der Markierung der gefundenen Parklücke, dem aktuellen Fahrschlauch des Fahrzeugs beim aktuellen Lenkeinschlag oder der geplanten Trajektorie beim automatischen Einparken entsprechen. Auch die Anzeigen von separaten Funktionen wie dem Manövrierassistenten, Felgenschutz sowie des Anhängerrangierassistenten werden in den Views umgesetzt.

Die einzelnen Assistenzteilsysteme, wie beispielsweise der elektronische Rückspiegel oder die Rückfahrkamera, arbeiten im Stand der Technik unabhängig voneinander und verwenden insbesondere separate Anzeigeorte und Displays. Insbesondere das Fehlen von Informationen, Markierungen, Hinweisen oder Hilfslinien des Assistenzteilsystems, welche sich nicht auf dem anderen Anzeigeort beziehungsweise Display wiederfinden, können zu einem inkonsistenten Eindruck beim Fahrer führen.

Je nach Bildausschnitt zeigen nun die elektronischen Spiegel gemäß dem Stand der Technik teilweise überlappende Bereiche zu den View-Systemen, wobei jedoch die Abstandsmarkierungen der Einparkhilfe oder Hilfslinien fehlen, obwohl umgebende Objekte hier vielleicht besser oder zumindest aus anderer Perspektive zu sehen sind.

Die DE 10 2015 122 997 A1 offenbart ein Verfahren zur Darstellung eines rückwärtigen Außenbereichs eines Fahrzeugs, mit wenigstens einer Kameravorrichtung am Fahrzeug. Die Kameravorrichtung wird in verschiedene Kameraeinstellungen gebracht, und in Abhängigkeit von den Kameraeinstellungen werden jeweils unterschiedliche kameraeinstellungsabhängige Aufnahmebereiche des Außenbereichs durch die Kameravorrichtung erfasst.

Ein Aspekt der US 2015/0197197 A1 umfasst eine Umgebungsüberwachungsvorrichtung einen Erfassungsabschnitt, der erste erfasste Bilddaten erhält, die von einem ersten Bilderfassungsabschnitt ausgegeben werden, und zweite erfasste Bilddaten, die von einem zweiten Bilderfassungsabschnitt ausgegeben werden, wobei der erste Bilderfassungsabschnitt bereitgestellt wird bei einem Fahrzeug und ein Erfassen eines Bildes in einer Fahrtrichtung des Fahrzeugs durchgeführt wird und Bereitstellen des zweiten Bilderfassungsabschnitts bei dem Fahrzeug und ein Erfassen eines Bildes in einer Breitenrichtung des Fahrzeugs, wobei die Fahrtrichtung des Fahrzeugs einem ersten Bilderfassungsbereich entspricht. Die Breitenrichtung des Fahrzeugs entspricht einem zweiten Bilderfassungsbereich und ein Ausgabeabschnitt überlagert einen Indikator, der einen vorbestimmten Bereich in Bezug auf das Fahrzeug anzeigt, und zwar in mindestens einem ersten Anzeigebereich, der ein Bild anzeigt, auf dem die ersten erfassten Bilddaten basieren, und ein zweiter Anzeigebereich zeigt ein Bild an, auf dem die zweiten erfassten Bilddaten basieren, in einem Bereich, in dem der Indikator entsprechend einem überlagerten Bereich des Indikators angezeigt wird, in einem Fall, in dem der überlagerte Bereich des Indikators in dem anderen des ersten Anzeigebereichs und des zweiten Anzeigebereichs enthalten ist. Der Ausgabeabschnitt überlagert den Indikator in dem anderen von dem ersten Anzeige-bereich und dem zweiten Anzeigebereich auf eine Anzeigeweise, die einer Anzeigeweise des Indikators entspricht, der in dem einen von dem ersten Anzeigebereich und dem zweiten Anzeigebereich angezeigt wird.

Aufgabe der vorliegenden Erfindung ist es, ein Fahrerassistenzsystem sowie ein Verfahren zu schaffen, mittels welchem zusätzliche Informationen für einen Fahrer des Kraftfahrzeugs auf einer Anzeigeeinrichtung dargestellt werden können.

Diese Aufgabe wird durch ein Fahrerassistenzsystem sowie durch ein Verfahren gemäß den unabhängigen Patentansprüchen gelöst. Vorteilhafte Weiterbildungen ergeben sich aus den Unteransprüchen.

Ein Aspekt der Erfindung betrifft ein Fahrerassistenzsystem für ein Kraftfahrzeug. Das Fahrerassistenzsystem weist ein erstes Assistenzteilsystem zur Erfassung eines ersten Teilbereichs einer Umgebung des Kraftfahrzeugs auf. Ferner weist das Fahrerassistenzsystem ein zweites Assistenzteilsystem zur Erfassung eines zweiten Teilbereichs der Umgebung auf. Das erste Assistenzteilsystem ist zum Erzeugen eines ersten Bilds des ersten Teilbereichs ausgebildet und das zweite Assistenzteilsystem ist zum Erzeugen eines zweiten Bilds des zweiten Teilbereichs ausgebildet. Das Fahrerassistenzsystem weist eine Anzeigeeinrichtung zum Anzeigen zumindest des ersten Bilds auf.

Es ist vorgesehen, dass die Anzeigeeinrichtung dazu ausgebildet ist, eine erste erweiterte Realität (AR - augmented Reality) anzuzeigen, wobei die erste erweiterte Realität durch Überlagerung des ersten Bilds mit einer auf Basis des ersten Bilds erzeugten ersten Assistenzinformation des ersten Assistenzteilsystems als erster erweiterter Realitätsinhalt und durch Überlagerung mit einer auf Basis des zweiten Bilds erzeugten zweiten Assistenzinformation des zweiten Assistenzteilsystems als zweiter erweiterter Realitätsinhalt erzeugt ist.

Dadurch ist es ermöglicht, dass neben dem ersten erweiterten Realitätsinhalt, welcher in Abhängigkeit des ersten Bilds erzeugt wird, auch die zweite Assistenzinformation als zweiter erweiterter Realitätsinhalt angezeigt werden kann. Somit können Informationen des zweiten Assistenzteilsystems und des ersten Assistenzteilsystems auf der Anzeigeeinrichtung angezeigt werden, so dass der Fahrer zusätzliche Informationen des zweiten Assistenzteilsystems erhält. Somit entsteht für den Fahrer des Kraftfahrzeugs eine informativere Informationsanzeige der Umgebungsinformationen des Kraftfahrzeugs. Ferner ist vorgesehen, dass das erste Assistenzteilsystem und das zweite Assistenzteilsystem jeweils als elektronischer Rückspiegel ausgebildet sind. Beispielsweise kann dann ein elektronischer Rückspiegel auf einer linken Seite des Kraftfahrzeugs angeordnet sein und/oder ein zweiter elektronischer Rückspiegel auf einer rechten Seite des Kraftfahrzeugs angeordnet sein. Insbesondere können diese im Bereich des vorderen Kotflügels und/oder im Bereich einer Tür des Kraftfahrzeugs und/oder hinter einer Dachkante des Kraftfahrzeugs angeordnet sein. Diese Aufzählung ist rein beispielhaft und keinesfalls abschließend anzusehen. Beim elektronischen Rückspiegel handelt es sich insbesondere um eine Kamera, welche den Rückfahrbereich, welcher sonst durch den Seitenspiegel betrachtet werden kann, abdeckt. Insbesondere eine Kamera nimmt dabei diesen Teilbereich auf und projiziert das erfasste Bild des erfassten Teilbereichs auf eine Anzeigeeinrichtung des elektronischen Rückspiegels. Dabei kann die Anzeigeeinrichtung des elektronischen Rückspiegels insbesondere im Innenraum des Kraftfahrzeugs angeordnet werden, sodass diese vor Umwelteinflüssen geschützt ist, wodurch auch Verspiegelungen, beispielsweise durch das Seitenfenster, verhindert werden.

Ferner ist vorgesehen, dass das erste Assistenzteilsystem und das zweite Assistenzteilsystem als eine elektronische Rückfahrkamera ausgebildet sind. Insbesondere beim Rückwärtsrangieren ist es von Vorteil, wenn dem Fahrer des Kraftfahrzeugs zusätzliche Informationen gegeben werden können über beispielsweise den Rückfahrschlauch, da oftmals ein direkter Blick des Fahrers in den rückwärtigen Raum für den Fahrer nicht möglich ist. Insbesondere durch die Fusion der ersten Assistenzinformation mit der zweiten Assistenzinformation können somit bei der elektronischen Rückfahrkamera dem Fahrer zusätzliche wichtige Informationen bezüglich der Trajektorie gegeben werden, sodass dieser die zusätzliche Information angezeigt bekommt, wodurch ein zuverlässiger Betrieb des Kraftfahrzeugs für den Fahrer ermöglicht ist.

Insbesondere kann vorgesehen sein, dass sich die Teilbereiche überlappen und/oder die Teilbereich zumindest teilweise unterschiedliche Perspektiven der Umgebung darstellen.

Beispielsweise können Hilfslinien und Trajektorien bei kamerabasierten Assistenzteilsystemen, welche auch "View-Systeme" bezeichnet werden, auf eine Art und Weise ins Bild eingebettet werden, die einer Projektion auf die Fahrbahnebene entspricht, so dass eine optische Überlagerung der Hilfslinien und den Trajektorien mit dem aufgenommenen Bild angezeigt werden kann. Hierbei kann unter anderem dem Fahrer geholfen werden abzuschätzen, ob das Kraftfahrzeug mit umgebenden Objekten kollidiert, oder um es an einer Parkmarkierung und/oder Randsteinen oder ähnlichem auszurichten. Insbesondere beim teilautomatisierten und/oder beim automatisierten Einparken als Teilaspekt des automatisierten Fahrens ist dies eine wesentliche Eigenschaft, um gegebenenfalls einer Überwachungspflicht als Fahrer des Kraftfahrzeugs nachzukommen. Insbesondere kann somit bei den unterschiedlichen Bildern eine bestimmte Teilansicht gewählt werden und in diesem Sichtfeld beispielsweise der elektronische Rückspiegel berücksichtigt werden und somit diese Detailansicht mit der Anzeigeeinrichtung angezeigt werden. Somit kann für den Fahrer des Kraftfahrzeugs eine konsistente, zusammenhängende und lückenlose Anzeige bereitgestellt werden.

Beispielsweise kann dann auf der Anzeigeeinrichtung die Markierung von relevanten Fahrzeugen und Objekten, die das zweite Assistenzteilsystem erkannt hat, auch im ersten Bild des ersten Assistenzteilsystems angezeigt werden. Ferner kann beispielsweise auch eine Kennzeichnung von belegten Spuren beispielsweise für einen Spurwechselassistenten oder eine "Blindspotdetection" (Totwinkelerkennung), welche durch das zweite Assistenzteilsystem durchgeführt wurde, auch im ersten Bild des ersten Assistenzteilsystems angezeigt werden.

Bei einem weiteren Teilaspekt können, insbesondere bei einer technischen Zusammenlegung der Systeme, beispielsweise mittels eines gemeinsamen Steuergerätes, sich weitere Vorteile ergeben. Beispielsweise kann eine bessere 3D-Darstellung in den kamerabasierten Assistenzteilsystemen durch mehr Kameras realisiert werden. Des Weiteren kann eine bessere Qualität durch mehr verschiedene Blickwinkel und Brennweiten der jeweiligen kamerabasierten Assistenzteilsysteme realisiert werden. Ferner kann durch gegenseitigen Abgleich bei der Kalibrierung eine Qualitätssteigerung durchgeführt werden. Eine einheitliche Darstellung von Markierungen, Hilfslinien und dergleichen, da diese in einer gemeinsamen Umfeldrepräsentanz relativ zum Fahrzeug platziert werden, kann ebenfalls durchgeführt werden. Ferner kann eine verbesserte Umweltrekonstruktion der Bildauswertung durchgeführt werden, da mehr Eingangskanäle mit unterschiedlichen relativen Bewegungsrichtungen für zumindest einen "Structure-from-Motion-Ansatz" zur Verfügung gestellt werden kann. Ferner können Ergänzungen bei Bildinhalten insbesondere in einem Überlappungsbereich durchgeführt werden.

Gemäß einer vorteilhaften Ausgestaltungsform kann die Anzeigeeinrichtung dazu ausgebildet sein, eine zweite erweiterte Realität anzuzeigen, wobei die zweite erweiterte Realität durch Überlagerung des zweiten Bilds mit dem zweiten erweiterten Realitätsinhalt und durch Überlagerung mit dem ersten erweiterten Realitätsinhalt erzeugt ist. Mit anderen Worten kann die erste erweiterte Realität und die zweite erweiterte Realität auf der Anzeigeeinrichtung zusammen angezeigt werden. Somit kann für den Fahrer auf einer Anzeigeeinrichtung sowohl die erste erweiterte Realität als auch die zweite erweiterte Realität angezeigt werden. Der Fahrer des Kraftfahrzeugs hat somit auf einem Blick die Informationen des ersten Assistenzteilsystems und die Informationen des zweiten Assistenzteilsystems. Diese sind jeweilig um die Informationen des weiteren Assistenzteilsystems ergänzt. Somit können dem Fahrer des Kraftfahrzeugs in einer gemeinsamen Anzeigeeinrichtung die beiden erweiterten Realitäten angezeigt werden, sodass dieser intuitiv die Informationen der Assistenzteilsysteme wahrnehmen kann und somit zuverlässiger das Kraftfahrzeug betrieben werden kann.

Ebenfalls vorteilhaft ist, wenn die Anzeigeeinrichtung dazu ausgebildet ist, zumindest das erste Bild und das zweite Bild mit dem ersten erweiterten Realitätsinhalt und dem zweiten erweiterten Realitätsinhalt als eine fusionierte, gemeinsame erweiterte Realität anzuzeigen. Somit kann mittels der Anzeigeeinrichtung ein kamerabasiertes Assistenzteilsystem bereitgestellt werden. Beispielsweise kann eine 3D-Anzeige bereitgestellt werden. Ebenfalls möglich ist, dass beispielsweise so ein Draufsicht-Assistent, ein sogenannter Top-View-Assistent, bereitgestellt werden kann. Insbesondere kann vorgesehen sein, dass von weiteren Assistenzteilsystemen weitere Informationen für die Anzeigeeinrichtung geliefert werden. Somit kann eine Fusion von den weiteren Assistenzteilsystemen ebenfalls ermöglicht werden. Dadurch kann eine zuverlässige und verbesserte Darstellung von Informationen auf der Anzeigeeinrichtung für den Fahrer realisiert werden.

In einer weiteren vorteilhaften Ausgestaltungsform ist der erste Teilbereich mittels einer ersten Kamera des ersten Assistenzteilsystems und/oder der zweite Teilbereich mittels einer zweiten Kamera des zweiten Assistenzteilsystems erfassbar. Insbesondere bei Kameras handelt es sich um bereits etablierte Systeme innerhalb des Kraftfahrzeugs. Insbesondere sind im Kraftfahrzeug bereits mehrere Kameras angeordnet, welche für die Erfassung des ersten Teilbereichs und/oder des zweiten Teilbereichs genutzt werden können. Insbesondere können die Informationen dieser Kameras für die Erzeugung des ersten Bilds und/oder des zweiten Bilds genutzt werden. Des Weiteren sind die Kameras insbesondere hochauflösend ausgebildet, sodass eine verbesserte Erfassung des ersten Teilbereichs und/oder des zweiten Teilbereichs ermöglicht ist. Dadurch kann eine informativere zumindest erste erweiterte Realität erzeugt werden, sodass für den Fahrer des Kraftfahrzeugs eine verbesserte Darstellung von einer Vielzahl von Informationen realisiert werden kann.

Es hat sich weiterhin als vorteilhaft erwiesen, wenn der erste erweiterte Realitätsinhalt und/oder der zweite erweiterte Realitätsinhalt als ein virtueller Fahrschlauch und/oder als eine virtuelle Entfernungsmarkierung, insbesondere beispielsweise zu einem Objekt, und/oder als eine virtuelle Hilfslinie, insbesondere beispielsweise bei einer identifizierten Parkfläche, und/oder als eine aktuelle Trajektorie des Kraftfahrzeugs und/oder als eine Anhängertrajektorie des Kraftfahrzeugs mit einem Anhänger ausgebildet ist. Insbesondere durch die Fusionierung der erwähnten erweiterten Realitätsinhalte kann somit zuverlässig ein konsistentes Bild für den Fahrer geschaffen werden, sodass dieser zuverlässig das Kraftfahrzeug betreiben kann. Beispielsweise kann vorgesehen sein, dass als erster erweiterter Realitätsinhalt ein virtueller Fahrschlauch mittels des ersten Assistenzteilsystems angezeigt wird. Zusätzlich können dann noch von dem zweiten Assistenzteilsystem die Entfernungsmarkierungen beispielsweise zu einem Objekt mit in die Anzeigeeinrichtung fusioniert werden. Ferner kann vorgesehen sein, sollte beispielsweise das Kraftfahrzeug mit einem Anhänger gekoppelt sein, dass sowohl virtuelle Hilfslinien durch das erste Assistenzteilsystem, beispielsweise für eine identifizierte Parkfläche, auf der Anzeigeeinrichtung dargestellt werden und ebenfalls die Trajektorie des Anhängers als Anhängerrangiersystems als zweites Assistenzteilsystem. Somit kann eine komfortable Anzeige für den Fahrer realisiert werden, sodass dieser zuverlässig seine Umgebung überwachen kann.

Gemäß einer weiteren vorteilhaften Ausgestaltungsform ist das Fahrerassistenzsystem dazu ausgebildet, dass mittels zumindest einer weiteren Anzeigeeinrichtung des ersten Assistenzteilsystems zumindest das mit dem ersten erweiterten Realitätsinhalt überlagerte erste Bild und/oder die erste erweiterte Realität zusätzlich angezeigt sein kann und/oder zumindest das mit dem zweiten erweiterten Realitätsinhalt überlagerte zweite Bild und/oder mittels zumindest einer nochmals weiteren Anzeigeeinrichtung des zweiten Assistenzteilsystems zumindest das mit dem zweiten erweiterten Realitätsinhalt überlagerte zweite Bild und/oder eine zweite erweiterte Realität zusätzlich angezeigt sein kann. Somit kann eine Redundanz geschaffen werden und insbesondere kann für den Fahrer des Kraftfahrzeugs bei mehreren Blickrichtungen des Fahrers die entsprechende Anzeige bereitgestellt werden. Somit kann bei den unterschiedlichen, insbesondere sich wechselnden, Blickrichtungen des Fahrers, beispielsweise während eines Einparkvorgangs, dennoch zuverlässig die Assistenzinformation entsprechend bereitgestellt werden. Beispielsweise kann auf einer Anzeigeeinrichtung eines elektronischen Rückspiegels als erste Anzeigeeinrichtung die erste erweiterte Realität angezeigt werden und beispielsweise bei einer weiteren Anzeigeeinrichtung, welche beispielsweise in der Mittelkonsole des Kraftfahrzeugs angeordnet ist, zusätzlich die erste erweiterte Realität angezeigt werden. Somit kann sowohl bei einer Blickrichtung nach links als auch bei einer Blickrichtung in Richtung der Mittelkonsole die entsprechende erweiterte Realität angezeigt werden, wodurch das Kraftfahrzeug zuverlässiger durch den Fahrer betrieben werden kann.

In einer weiteren vorteilhaften Ausgestaltungsform ist das Fahrerassistenzsystem zum Betrieb bei einer Vielzahl von Betriebszuständen des Kraftfahrzeugs, insbesondere bei einem zumindest teilweise autonomen Betriebszustand und/oder insbesondere bei einem Parkmanöver als Betriebszustand, ausgebildet. Insbesondere kann die Fusion der Assistenzinformationen bei den unterschiedlichen Betriebszuständen des Kraftfahrzeugs stattfinden. Insbesondere können somit mehrere Assistenzteilsysteme, welche bei den unterschiedlichen Betriebszuständen des Kraftfahrzeugs genutzt werden, fusioniert werden. Insbesondere können auch Assistenzteilsysteme benutzt werden, welche üblicherweise ab einem vorgegebenen Geschwindigkeitsschwellwert ungenutzt beziehungsweise deaktiviert sind, so dass die Informationen auch bei Geschwindigkeiten über dem Geschwindigkeitsschwellwert zur Verfügung gestellt werden können. Beispielsweise können die Informationen eines Parkassistenten als Assistenzteilsystem auch bei normalen Fahrbetrieb dann genutzt werden. Beispielsweise kann auch bei einem Abstandsassistenzsystem und bei einem Spurwechselassistenzsystem die Fusion der Assistenzinformationen durchgeführt werden.

Ein weiterer Aspekt der Erfindung betrifft ein Verfahren zum Betreiben eines Fahrerassistenzsystems für ein Kraftfahrzeug. Mittels eines ersten Assistenzteilsystems wird ein erster Teilbereich einer Umgebung des Kraftfahrzeugs und mittels eines zweiten Assistenzteilsystems wird ein zweiter Teilbereich der Umgebung erfasst. Mittels des ersten Assistenzteilsystems wird ein erstes Bild des ersten Teilbereichs erzeugt und mittels des zweiten Assistenzteilsystems wird ein zweites Bild des zweiten Teilbereichs erzeugt. Mittels einer Anzeigeeinrichtung des Fahrerassistenzsystems wird zumindest das erste Bild angezeigt.

Es ist vorgesehen, dass mittels der Anzeigeeinrichtung eine erste erweiterte Realität angezeigt wird. Die erste erweiterte Realität wird durch Überlagerung des ersten Bilds mit einer ersten Assistenzinformation, welche auf Basis des ersten Bilds erzeugt wird, des ersten Assistenzteilsystems als erster erweiterter Realitätsinhalt und durch Überlagerung mit einer zweiten Assistenzinformation, welche auf Basis des zweiten Bilds erzeugt wird, des zweiten Assistenzteilsystems als zweite erweiterter Realitätsinhalt erzeugt.

Vorteilhafte Ausgestaltungsformen des Fahrerassistenzsystems sind als vorteilhafte Ausgestaltungsformen des Verfahrens anzusehen. Das Fahrerassistenzteilsystem weist dazu gegenständliche Merkmale auf, welche ein Verfahren beziehungsweise eine vorteilhafte Ausgestaltungsform davon ermöglichen.

Im Folgenden sind Ausführungsbeispiele der Erfindung beschrieben. Hierzu zeigt die einzige Figur in schematischer Ansicht eine Ausführungsform eines Fahrerassistenzsystems.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In der Figur sind funktionsgleiche Elemente jeweils mit denselben Bezugszeichen versehen.

Die einzige Figur zeigt in einer schematischen Ansicht eine Ausführungsform eines Fahrerassistenzsystems 1. Das Fahrerassistenzsystem 1 ist in einem Kraftfahrzeug 2 ausgebildet. Das Fahrerassistenzsystem 1 weist ein erstes Assistenzteilsystem 3 und ein zweites Assistenzteilsystem 4 auf. Die jeweiligen Assistenzteilsysteme 3, 4 sind zur Erfassung der Umgebung 5 des Kraftfahrzeugs 2 ausgebildet. Insbesondere erfasst das erste Assistenzteilsystem 3 einen ersten Teilbereich 6 der Umgebung 5 und das zweite Assistenzteilsystem 4 erfasst einen zweiten Teilbereich 7 der Umgebung 5. Die Teilbereiche 6, 7 überlappen sich zumindest teilweise. Alternativ könne die Teilbereiche 6, 7 auch unterschiedliche Perspektiven der Umgebung 5 sein, wobei sich die Perspektiven dann zumindest teilweise überlappen.

Insbesondere weist das erste Assistenzteilsystem 3 eine erste Kamera 8 auf. Im vorliegenden Beispiel ist insbesondere vorgesehen, dass das erste Assistenzteilsystem 3 als elektronischer Rückspiegel 10 ausgebildet ist. Das zweite Assistenzteilsystem 4 weist im vorliegenden Beispiel eine zweite Kamera auf und ist als rückwärtsgerichtete Rückfahrkamera 9 ausgebildet. Diese Ausführungsform ist rein beispielhaft und keinesfalls abschließend zu sehen.

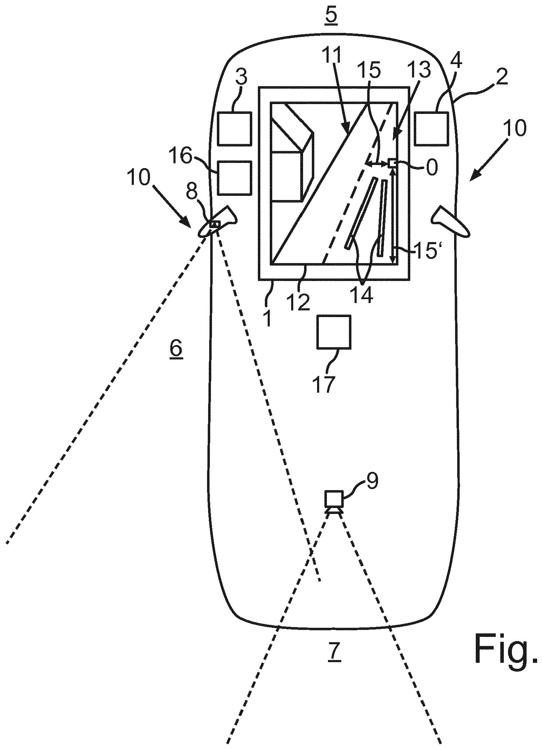

Mittels des ersten Assistenzteilsystems 3, insbesondere mit der Kamera 8, ist ein erstes Bild 11 des ersten Teilbereichs 6 erzeugbar. Mittels des zweiten Assistenzteilsystems 4, insbesondere mittels der Rückfahrkamera 9, ist ein nicht dargestelltes zweites Bild des zweiten Teilbereichs 7 erzeugbar. Das Fahrerassistenzsystem 1 weist ferner eine Anzeigeeinrichtung 12 auf. Mittels der Anzeigeeinrichtung 12 ist zumindest das erste Bild 11 anzeigbar.

Es ist vorgesehen, dass die Anzeigeeinrichtung 12 dazu ausgebildet ist, eine erste erweiterte Realität 13 anzuzeigen, wobei die erste erweiterte Realität 13 durch Überlagerung des ersten Bilds 11 mit einer auf Basis des ersten Bilds 11 erzeugten ersten Assistenzinformation des ersten Assistenzteilsystems 3 als erster erweiterter Realitätsinhalt 14 und durch Überlagerung mit einer auf Basis des zweiten Bilds erzeugten zweiten Assistenzinformation des zweiten Assistenzteilsystems 4 als ein zweiter erweiterter Realitätsinhalt 15 erzeugt ist. Mit anderen Worten wird die erste erweiterte Realität 13 sowohl mit dem Bild 11 als auch mit dem ersten erweiterten Realitätsinhalt 14, welcher vorliegend als Fahrschlauch ausgebildet ist, und mit dem zweiten erweiterten Realitätsinhalt, welcher vorliegend beispielsweise als eine Abstandsinformation 15, 15' ausgebildet ist, erzeugt. Die Abstandsinformation 15, 15' kann beispielsweise als eine Querabstandsinformation 15 zu einem Objekt O und/oder als eine Längsabstandsinformation 15' zu einem Objekt O ausgebildet sein.

Ferner kann vorgesehen sein, dass die Anzeigeeinrichtung 12 dazu ausgebildet ist, eine zweite erweiterte Realität anzuzeigen, wobei die zweite erweiterte Realität durch Überlagerung des zweiten Bilds mit dem zweiten erweiterten Realitätsinhalt 15 und durch Überlagerung mit dem ersten erweiterten Realitätsinhalt 14 erzeugt ist.

Ferner kann die Anzeigeeinrichtung 12 dazu ausgebildet sein, das zumindest erste Bild 11 und das zweite Bild mit dem ersten erweiterten Realitätsinhalt 14 und dem zweiten erweiterten Realitätsinhalt 15 als eine fusionierte, gemeinsame erweiterte Realität anzuzeigen. Insbesondere kann bei der gemeinsamen erweiterten Realität es noch dazu kommen, dass von weiteren Assistenzteilsystemen eine Fusion der Assistenzinformationen stattfindet. Beispielsweise kann dann die gemeinsame erweiterte Realität als Top-View-Assistent genutzt werden oder es kann eine 3D-Anzeige durch die Fusion erzeugt werden.

Insbesondere kann vorgesehen sein, dass der erste erweiterte Realitätsinhalt 14 und/oder der zweite erweiterte Realitätsinhalt 15 als ein virtueller Fahrschlauch und/oder als eine virtuelle Entfernungsmarkierung, insbesondere zu einem Objekt, und/oder als eine virtuelle Hilfslinie, insbesondere eine identifizierte Parkfläche, und/oder als eine aktuelle Trajektorie des Kraftfahrzeugs 2 und/oder als eine Anhängertrajektorie des Kraftfahrzeugs 2 mit einem Anhänger ausgebildet ist. Somit können insbesondere die unterschiedlichen Assistenzinformationen von unterschiedlichen Assistenzteilsystemen 3, 4 angezeigt werden.

Ferner kann insbesondere vorgesehen sein, dass mittels zumindest einer weiteren Anzeigeeinrichtung 16 des ersten Assistenzsystems 3 zumindest das mit dem ersten erweiterten Realitätsinhalt 14 überlagerte erste Bild 11 und/oder die erste erweiterte Realität 13 zusätzlich angezeigt ist. Alternativ oder ergänzend kann zumindest das mit der zweiten Assistenzinformation überlagerte zweite Bild und/oder mittels zumindest einer nochmals weiteren Anzeigeeinrichtung 17 des zweiten Assistenzteilsystems 4 zumindest das mit dem zweiten erweiterten Realitätsinhalt 15 überlagerte zweite Bild und/oder die zweite erweiterte Realität zusätzlich angezeigt werden.

Ferner kann vorgesehen sein, dass das Fahrerassistenzsystem 1 zum Betrieb bei einer Vielzahl von Betriebszuständen des Kraftfahrzeugs 2, insbesondere bei einem zumindest teilweise autonomen Betriebszustand und/oder insbesondere bei einem Parkmanöver als Betriebszustand, ausgebildet ist. Insbesondere kann somit das Anzeigen der ersten erweiterten Realität 13 mit dem ersten erweiterten Realitätsinhalt 14 und dem zweiten erweiterten Realitätsinhalt 15 sowohl bei Rückwärtsfahrt als auch bei Vorwärtsfahrt oder auch bei teilautonomer oder autonomer Fahrt des Kraftfahrzeugs durchgeführt werden. Insbesondere können auch Assistenzteilsysteme 3, 4 benutzt werden, welche üblicherweise ab einem vorgegebenen Geschwindigkeitsschwellwert ungenutzt beziehungsweise deaktiviert sind, so dass die Informationen auch bei Geschwindigkeiten über dem Geschwindigkeitsschwellwert zur Verfügung gestellt werden können. Beispielsweise können die Informationen eines Parkassistenten als Assistenzteilsystem 3, 4 auch bei normalen Fahrbetrieb dann genutzt werden. Somit kann das Fahrerassistenzsystem 1 als Parkassistenzsystem und/oder als Top-View-Assistenzsystem und/oder als Anhängerassistenzsystem genutzt werden.

Beim Verfahren zum Betreiben des Fahrerassistenzsystems 1 für das Kraftfahrzeug 2 wird mittels des ersten Assistenzteilsystems 3 der erste Teilbereich 6 der Umgebung 5 und mittels des zweiten Assistenzteilsystems 4 der zweite Teilbereich 7 erfasst. Mittels des ersten Assistenzteilsystems 3 wird das erste Bild 11 des ersten Teilbereichs 6 erzeugt und mittels des zweiten Assistenzteilsystems 4 wird das zweite Bild des zweiten Teilbereichs 7 erzeugt. Mittels der Anzeigeeinrichtung 12 wird zumindest das erste Bild 11 angezeigt. Es ist vorgesehen, dass mittels der Anzeigeeinrichtung 12 die erste erweiterte Realität 13 angezeigt wird. Die erste erweiterte Realität 13 wird durch Überlagerung des ersten Bilds 11 mit der ersten Assistenzinformation, welche auf Basis des ersten Bilds 11 erzeugt wird, des ersten Assistenzteilsystems 3 als erster erweiterter Realitätsinhalt 14 und durch Überlagerung mit der zweiten Assistenzinformation, welche auf Basis des zweiten Bilds erzeugt wird, des zweiten Assistenzteilsystems 4 als zweiter erweiterter Realitätsinhalt 15 erzeugt.

Insgesamt zeigt das Beispiel, wie durch die Erfindung eine Multikamera-Anzeige für das Fahrerassistenzsystem 1 erzeugt werden kann.

## Patentansprüche

1. Fahrerassistenzsystem (1) für ein Kraftfahrzeug (2), mit einem ersten Assistenzteilsystem (3) zur Erfassung eines ersten Teilbereichs (6) einer Umgebung (5) des Kraftfahrzeugs (2) und mit einem zweiten Assistenzteilsystem (4) zur Erfassung eines zweiten Teilbereichs (7) der Umgebung (5), wobei das erste Assistenzteilsystem (3) zum Erzeugen eines ersten Bilds (11) des ersten Teilbereichs (6) ausgebildet ist und das zweite Assistenzteilsystem (4) zum Erzeugen eines zweiten Bilds des zweiten Teilbereichs (7) ausgebildet ist und das Fahrerassistenzsystem (1) eine Anzeigeeinrichtung (12) zum Anzeigen zumindest des ersten Bilds (11) aufweist, wobei die Anzeigeeinrichtung (12) dazu ausgebildet ist, eine erste erweiterte Realität (13) anzuzeigen, wobei die erste erweiterte Realität (13) durch Überlagerung des ersten Bilds (11) mit einer auf Basis des ersten Bilds (11) erzeugten ersten Assistenzinformation des ersten Assistenzteilsystems (3) als erster erweiterter Realitätsinhalt (14) und durch Überlagerung mit einer auf Basis des zweiten Bilds erzeugten zweiten Assistenzinformation des zweiten Assistenzteilsystems (4) als zweiter erweiterter Realitätsinhalt (15) erzeugt ist,
**dadurch gekennzeichnet, dass** das erste Assistenzteilsystem (3) und das zweite Assistenzteilsystem (4) als elektronischer Rückspiegel (10) ausgebildet sind, wobei das erste Assistenzteilsystem (3) und das zweite Assistenzteilsystem (4) als eine elektronische Rückfahrkamera ausgebildet sind.

2. Fahrerassistenzsystem (1) nach Anspruch 1, wobei die Anzeigeeinrichtung (12) dazu ausgebildet ist, eine zweite erweiterte Realität anzuzeigen, wobei die zweite erweiterte Realität durch Überlagerung des zweiten Bilds mit dem zweiten erweiterten Realitätsinhalt (15) und durch Überlagerung mit dem ersten erweiterten Realitätsinhalt (14) erzeugt ist.

3. Fahrerassistenzsystem (1) nach Anspruch 1 und 2 Ansprüche, wobei die Anzeigeeinrichtung (12) dazu ausgebildet ist, zumindest das erste Bild (11) und das zweite Bild mit dem ersten erweiterten Realitätsinhalt (14) und dem zweiten erweiterten Realitätsinhalt (15) als eine fusionierte, gemeinsame erweiterte Realität anzuzeigen.

4. Fahrerassistenzsystem (1) nach einem der vorhergehenden Ansprüche, wobei der erste Teilbereich (6) mittels einer ersten Kamera (8) des ersten Assistenzteilsystems (3) und/oder der zweite Teilbereich (7) mittels einer zweiten Kamera (9) des zweiten Assistenzteilsystems (4) erfassbar ist.

5. Fahrerassistenzsystem (1) nach einem der vorhergehenden Ansprüche, wobei der erste erweiterter Realitätsinhalt (14) und/oder der zweite erweiterter Realitätsinhalt (15) als ein virtueller Fahrschlauch und/oder als eine virtuelle Entfernungsmarkierung und/oder als eine virtuelle Hilfslinie und/oder als eine aktuelle Trajektorie des Kraftfahrzeugs (2) und/oder als eine Anhängertrajektorie des Kraftfahrzeugs (2) mit einem Anhänger ausgebildet ist.

6. Fahrerassistenzsystem (1) nach einem der vorhergehenden Ansprüche, wobei dieses dazu ausgebildet ist, dass mittels zumindest einer weiteren Anzeigeeinrichtung (16) des ersten Assistenzteilsystems (3) zumindest das mit dem ersten erweiterten Realitätsinhalt (14) überlagerte erste Bild (11) und/oder die erste erweiterte Realität (13) zusätzlich angezeigt ist und/oder zumindest das mit dem zweiten erweiterten Realitätsinhalt (15) überlagerte zweite Bild und/oder mittels zumindest einer nochmals weiteren Anzeigeeinrichtung (17) des zweiten Assistenzteilsystems (4) zumindest das mit dem zweiten erweiterten Realitätsinhalt (15) überlagerte zweite Bild und/oder eine zweite erweiterte Realität zusätzlich angezeigt ist.

7. Fahrerassistenzsystem (1) nach einem der vorhergehenden Ansprüche, wobei das Fahrerassistenzsystem (1) zum Betrieb bei einer Vielzahl von Betriebszuständen des Kraftfahrzeugs (2), insbesondere bei einem zumindest teilweise autonomen Betriebszustand und/oder insbesondere bei einem Parkmanöver als Betriebszustand, ausgebildet ist.

8. Verfahren zum Betreiben eines Fahrerassistenzsystems (1) für ein Kraftfahrzeug (2), wobei mittels eines ersten Assistenzteilsystems (3) ein erster Teilbereich (6) einer Umgebung (5) des Kraftfahrzeugs (2) und mittels eines zweiten Assistenzteilsystems (4) ein zweiter Teilbereich (7) der Umgebung (5) erfasst wird, wobei mittels des ersten Assistenzteilsystems (3) ein erstes Bild (11) des ersten Teilbereichs (6) erzeugt wird und mittels des zweiten Assistenzteilsystems (4) ein zweites Bild des zweiten Teilbereichs (7) erzeugt wird und mittels einer Anzeigeeinrichtung (12) des Fahrerassistenzsystems (1) zumindest das erste Bild (11) angezeigt wird, wobei mittels der Anzeigeeinrichtung (12) eine erste erweiterte Realität (13) angezeigt wird, wobei die erste erweiterte Realität (13) durch Überlagerung des ersten Bilds (11) mit einer auf Basis des ersten Bilds (11) erzeugten ersten Assistenzinformation des ersten Assistenzteilsystems (3) als erster erweiterter Realitätsinhalt (14) und durch Überlagerung mit einer auf Basis des zweiten Bilds erzeugten zweiten Assistenzinformation des zweiten Assistenzteilsystems (3) als zweiter erweiterter Realitätsinhalt (15) erzeugt wird,
**dadurch gekennzeichnet, dass** das erste Assistenzteilsystem (3) und das zweite Assistenzteilsystem (4) als elektronischer Rückspiegel (10) bereitgestellt werden, wobei das erste Assistenzteilsystem (3) und das zweite Assistenzteilsystem (4) als eine elektronische Rückfahrkamera bereitgestellt werden.

## Claims

1. Driver assistance system (1) for a motor vehicle (2), comprising a first assistance subsystem (3) for capturing a first sub-area (6) of an environment (5) of the motor vehicle (2) and a second assistance subsystem (4) for capturing a second sub-area (7) of the environment (5), wherein the first assistance subsystem (3) is configured to generate a first image (11) of the first sub-area (6) and the second assistance subsystem (4) is configured to generate a second image of the second sub-area (7) and the driver assistance system (1) has a display device (12) for displaying at least the first image (11), wherein the display device (12) is configured to display a first augmented reality (13), wherein the first augmented reality (13) is generated by superimposing the first image (11) with first assistance information of the first assistance subsystem (3) generated on the basis of the first image (11) as first augmented reality content (14) and by superimposing second assistance information of the second assistance subsystem (4) generated on the basis of the second image as second augmented reality content (15),
**characterised in that** the first assistance subsystem (3) and the second assistance subsystem (4) are configured as an electronic rear-view mirror (10), wherein the first assistance subsystem (3) and the second assistance subsystem (4) are configured as an electronic reversing camera.

2. Driver assistance system (1) according to claim 1, wherein the display device (12) is configured to display a second augmented reality, the second augmented reality being generated by superimposing the second image with the second augmented reality content (15) and by superimposing with first augmented reality content (14).

3. Driver assistance system (1) according to claim 1 and 2 claims, wherein the display device (12) is configured to display at least the first image (11) and the second image with the first augmented reality content (14) and the second augmented reality content (15) as a merged, common expanded reality.

4. Driver assistance system (1) according to any of the preceding claims, wherein the first sub-area (6) can be captured by a first camera (8) of the first assistance subsystem (3) and/or the second sub-area (7) can be captured by a second camera (9) of the second assistance subsystem (4).

5. Driver assistance system (1) according to any of the preceding claims, wherein the first augmented reality content (14) and/or the second augmented reality content (15) are designed as a virtual driving channel and/or as a virtual distance marker and/or as a virtual auxiliary line and/or as a current trajectory of the motor vehicle (2) and/or as a trailer trajectory of the motor vehicle (2) with a trailer.

6. Driver assistance system (1) according to any of the preceding claims, wherein the latter is configured such that at least the first image (11) superimposed with the first augmented reality content (14) and/or the first augmented reality (13) is additionally displayed by at least one further display device (16) of the first assistance subsystem (3) and/or at least the second image superimposed with the second augmented reality content (15) and/or at least the second image superimposed with the second augmented reality content (15) and/or a second augmented reality is additionally displayed by at least one further display device (17) of the second assistance subsystem (4).

7. Driver assistance system (1) according to any of the preceding claims, wherein the driver assistance system (1) is configured for operation in numerous operating states of the motor vehicle (2), in particular in an at least partially autonomous operating state and/or in particular when the operating state is a parking manoeuvre.

8. Method for operating a driver assistance system (1) for a motor vehicle (2), wherein a first sub-area (6) of an environment (5) of the motor vehicle (2) is captured by a first assistance subsystem (3) and a second sub-area (7) of the environment (5) is captured by a second assistance subsystem (4), wherein a first image (11) of the first sub-area (6) is generated by the first assistance subsystem (3) and a second image of the second sub-area (7) is generated by the second assistance subsystem (4), and at least the first image (11) is displayed by a display device (12) of the driver assistance system (1), wherein a first augmented reality (13) is displayed by the display device (12), wherein the first augmented reality (13) is generated by superimposition of the first image (11) with first assistance information of the first assistance subsystem (3) generated on the basis of the first image (11) as first augmented reality content (14) and by superimposition with second assistance information of the second assistance subsystem (3) generated on the basis of the second image as second augmented reality content (15),
**characterised in that** the first assistance subsystem (3) and the second assistance subsystem (4) are configured as an electronic rear-view mirror (10), wherein the first assistance subsystem (3) and the second assistance subsystem (4) are configured as an electronic reversing camera.

## Revendications

1. Système d'assistance au conducteur (1) pour un véhicule automobile (2), avec un premier système partiel d'assistance (3) pour la détection d'une première zone partielle (6) d'un environnement (5) du véhicule automobile (2) et avec un deuxième système partiel d'assistance (4) pour la détection d'une deuxième zone partielle (7) de l'environnement (5), dans lequel le premier système partiel d'assistance (3) est réalisé pour la génération d'une première image (11) de la première zone partielle (6) et le deuxième système partiel d'assistance (4) est réalisé pour la génération d'une deuxième image de la deuxième zone partielle (7) et le système d'assistance au conducteur (1) présente un dispositif d'affichage (12) pour l'affichage au moins de la première image (11), dans lequel le dispositif d'affichage (12) est réalisé pour afficher une première réalité augmentée (13), dans lequel la première réalité augmentée (13) est générée par superposition de la première image (11) avec une première information d'assistance générée sur la base de la première image (11) du premier système partiel d'assistance (3) en tant que premier contenu de réalité augmentée (14) et par superposition avec une deuxième information d'assistance générée sur la base de la deuxième image du deuxième système partiel d'assistance (4) en tant que deuxième contenu de réalité augmentée (15),
**caractérisé en ce que** le premier système partiel d'assistance (3) et le deuxième système partiel d'assistance (4) sont réalisés en tant que rétroviseur électronique (10), dans lequel le premier système partiel d'assistance (3) et le deuxième système partiel d'assistance (4) sont formés en tant que caméra de recul électronique.

2. Système d'assistance au conducteur (1) selon la revendication 1, dans lequel le dispositif d'affichage (12) est réalisé pour afficher une deuxième réalité augmentée, dans lequel la deuxième réalité augmentée est générée par superposition de la deuxième image avec le deuxième contenu de réalité augmentée (15) et par superposition avec le premier contenu de réalité augmentée (14).

3. Système d'assistance au conducteur (1) selon la revendication 1 et 2 revendications, dans lequel le dispositif d'affichage (12) est réalisé pour afficher au moins la première image (11) et la deuxième image avec le premier contenu de réalité augmentée (14) et le deuxième contenu de réalité augmentée (15) en tant que réalité augmentée commune, fusionnée.

4. Système d'assistance au conducteur (1) selon l'une quelconque des revendications précédentes, dans lequel la première zone partielle (6) peut être détectée au moyen d'une première caméra (8) du premier système partiel d'assistance (3) et/ou la deuxième zone partielle (7) peut être détectée au moyen d'une deuxième caméra (9) du deuxième système partiel d'assistance (4).

5. Système d'assistance au conducteur (1) selon l'une quelconque des revendications précédentes, dans lequel le premier contenu de réalité augmentée (14) et/ou le deuxième contenu de réalité augmentée (15) est réalisé en tant que couloir de conduite virtuel et/ou en tant que marquage d'éloignement virtuel et/ou en tant que ligne d'aide virtuelle et/ou en tant que trajectoire actuelle du véhicule automobile (2) et/ou en tant que trajectoire de remorque du véhicule automobile (2) avec une remorque.

6. Système d'assistance au conducteur (1) selon l'une quelconque des revendications précédentes, dans lequel celui-ci est réalisé pour qu'au moins la première image (11) superposée avec le premier contenu de réalité augmentée (14) et/ou la première réalité augmentée (13) est affichée en plus au moyen d'au moins un autre dispositif d'affichage (16) du premier système partiel d'assistance (3) et/ou au moins la deuxième image superposée avec le deuxième contenu de réalité augmentée (15) et/ou au moyen d'au moins encore un autre dispositif d'affichage (17) du deuxième système partiel d'assistance (4) au moins la deuxième image superposée avec le deuxième contenu de réalité augmentée (15) et/ou une deuxième réalité augmentée est affichée en plus.

7. Système d'assistance au conducteur (1) selon l'une quelconque des revendications précédentes, dans lequel le système d'assistance au conducteur (1) est réalisé pour le fonctionnement dans une pluralité d'états de fonctionnement du véhicule automobile (2), en particulier dans un état de fonctionnement au moins partiellement autonome et/ou en particulier pour une manœuvre de parking en tant qu'état de fonctionnement.

8. Procédé de fonctionnement d'un système d'assistance au conducteur (1) pour un véhicule automobile (2), dans lequel une première zone partielle (6) d'un environnement (5) du véhicule automobile (2) est détectée au moyen d'un premier système partiel d'assistance (3) et une deuxième zone partielle (7) de l'environnement (5) est détectée au moyen d'un deuxième système partiel d'assistance (4), dans lequel une première image (11) de la première zone partielle (6) est générée au moyen du premier système partiel d'assistance (3) et une deuxième image de la deuxième zone partielle (7) est générée au moyen du deuxième système partiel d'assistance (4) et au moins la première image (11) est affichée au moyen d'un dispositif d'affichage (12) du système d'assistance au conducteur (1), dans lequel une première réalité augmentée (13) est affichée au moyen du dispositif d'affichage (12), dans lequel la première réalité augmentée (13) est générée par superposition de la première image (11) avec une première information d'assistance générée sur la base de la première image (11) du premier système partiel d'assistance (3) en tant que premier contenu de réalité augmentée (14) et par superposition avec une deuxième information d'assistance générée sur la base de la deuxième image du deuxième système partiel d'assistance (3) en tant que deuxième contenu de réalité augmentée (15),
**caractérisé en ce que** le premier système partiel d'assistance (3) et le deuxième système partiel d'assistance (4) sont réalisés en tant que rétroviseur électronique (10), dans lequel le premier système partiel d'assistance (3) et le deuxième système partiel d'assistance (4) sont mis à disposition en tant que caméra de recul électronique.
